**Europäisches Patentamt**

**European Patent Office**

**Office européen des brevets**

(11) Numéro de publication: **0 208 969**
**A1**

(12) **DEMANDE DE BREVET EUROPEEN**

(21) Numéro de dépôt: **86108752.6**

(22) Date de dépôt: **26.06.86**

(51) Int. Cl.⁴: **F 16 L 23/02**

(30) Priorité: **28.06.85 LU 85982**

(43) Date de publication de la demande: **21.01.87**
**Bulletin 87/4**

(84) Etats contractants désignés: **BE DE FR GB IT LU NL**

(71) Demandeur: **COMMUNAUTE EUROPEENNE DE L'ENERGIE ATOMIQUE (EURATOM), Bâtiment Jean Monnet Plateau du Kirchberg Boîte Postale 1907, L-1019 Luxembourg (LU)**

(72) Inventeur: **Rochez, René, via Papa Giovanni, 5, I-21020 Brebbia (IT)**

(74) Mandataire: **Weinmiller, Jürgen, Lennéstrasse 9, D-8133 Feldafing (DE)**

(54) **Raccord télémanipulable entre une bride fixe et une bride mobile.**

(57) L'invention se réfère à un raccord télémanipulable entre une bride fixe d'un tuyau et une bride mobile d'un autre tuyau, comportant plusieurs clames (4), qui sont montées sur une couronne extérieure de la bride mobile (1) et s'engagent sur une face arrière de la bride fixe (3).

Selon l'invention, chaque clame (4) est montée sur ladite couronne à l'aide d'une vis télémanipulable (5), qui traverse la clame par un trou oblique. La vis porte un noyau (8) d'une forme complémentaire audit trou, et les clames sont bloquées en rotation par des butées (18) amovibles.

RACCORD TELEMANIPULABLE ENTRE UNE
BRIDE FIXE ET UNE BRIDE MOBILE

---

L'invention se réfère à un raccord télémanipulable entre une
bride fixe d'un tuyau et une bride mobile d'un autre tuyau,
comportant plusieurs clames qui sont montées sur une couronne
extérieure de la bride mobile et qui s'engagent sur une face
arrière de la bride fixe.

Un raccord entre deux brides de tuyaux à l'aide d'un grand
nombre de vis qui traversent des trous alignés des deux brides
ne se prête pas à une télémanipulation, car il faut d'abord
positionner angulairement les deux brides pour pouvoir enfiler
les vis, et puis il faut engager des écrous dans les filetages
des vis, ce qui est délicat, car on risque de perdre vis ou
écrou.

Un système à clames tel que spécifié ci-dessus se prête mieux
à une télémanipulation, car le raccord peut se faire dans
n'importe quelle position angulaire et les clames avec leurs
vis de serrage peuvent être associées de façon imperdable à
l'une des deux brides.

Il est un inconvénient d'un tel raccord que les clames qui
sont montées de façon libre en rotation sur leurs vis ne
restent pas dans une position déterminée avant leur engagement
avec la bride du tuyau fixe. Une seule clame en position irrégulière parmi les quatre ou six clames présentes peut
mettre en cause le positionnement correct des deux faces
d'étanchéité des deux brides.

Un autre inconvénient d'un tel raccord se manifeste lors d'un
grippage du filet d'une des vis, qui rend le dévissage imposssible.
Cet accident demande habituellement la découpe de la vis. Une
réparation coûteuse est alors nécessaire pour enlever la partie
de la vis qui est restée prisonnière dans le filet de la bride
mobile.

L'invention a pour but de remédier aux inconvénients cités
ci-dessus et de proposer un raccord télémanipulable tel que
spécifié ci-dessus, qui permet de se passer des problèmes de
positionnement des clames avant le couplage des deux tuyaux.
Un autre but de l'invention est de proposer un raccord où le
grippage d'une vis n'entraîne pas le découpage de celle-ci.

Ce but est atteint selon l'invention par le fait que chaque
clame est montée sur la couronne extérieure de la bride mobile
à l'aide d'une vis télémanipulable, qui traverse la clame par
un trou oblique, l'axe de chaque vis étant parallèle à l'axe
du tuyau et la projection de l'axe du trou dans le plan de la
bride coincidant avec un rayon passant par l'axe du tuyau et
l'axe de la vis associée, que la vis porte,en appui contre sa
tête et libre en rotation, un noyau d'une forme complémentaire
audit trou, et que les clames sont bloquées en rotation sur ladite couronne par des butées amovibles.

Ainsi, grâce au trou oblique et au noyau complémentaire, l'actionnement d'une vis fait déplacer radialement la clame associée
sans que cette dernière puisse tourner. En cas d'un grippage,
les clames peuvent par contre être tournées après enlèvement
de certaines des butées.

Dans une réalisation préférée de l'invention, les trous dans
les clames et les noyaux ont une section oblongue et arrondie.
En variante, cette section peut être rectangulaire.

De préférence, chaque noyau est enfilé sur sa vis de façon imperdable grâce à un circlips logé dans une rainure circonférentielle de la vis.

Bien que la fonction principale des butées est de bloquer les clames en rotation, elles peuvent en outre comporter des têtes assurant un guidage des clames perpendiculairement au plan des brides.

L'invention sera décrite ci-après plus en détail à l'aide d'un exemple de réalisation et des dessins.

Fig. 1 représente en coupe axiale un raccord télémanipulable selon l'invention.

Fig. 2 montre une vue sur le raccord de la fig. 1.

Fig. 3 représente une vue en coupe perpendiculairement à la fig. 2 à travers deux butées de blocage.

Le raccord selon les figures entre un tuyau fixe 11 et un tuyau mobile 12 consiste principalement en une bride 1 soudée au tuyau mobile 12, une bride 2 soudée au tuyau fixe 11 et en quatre clames 4, qui sont enfilées chacune sur une vis 5. Chaque vis pénètre par son filetage dans un trou taraudé d'une couronne extérieure de la bride mobile 1 et elle comporte entre son extrémité 25 télémanipulable, par exemple à section hexagonale, et son filetage 20 une rainure circonférentielle logeant un circlips 6 et une rondelle 7. Ainsi, la vis est imperdable, et la rondelle constitue une butée de fin de course de vissage.

A l'autre extrémité, la vis est munie d'une tête 15 suivie par une partie cylindrique lisse 16. Sur cette partie est enfilé un noyau 8, qui est bloqué en direction axiale de la vis par une autre rondelle 9, qui est maintenue en place par un autre circlips 10 sur la vis.

Le noyau 8 a une section allongée ou rectangulaire et il est logé dans un trou oblique de forme complémentaire prévu dans la clame 4. L'axe de ce trou est situé dans un plan radial par rapport à l'axe 17 des tuyaux, et elle coupe cet axe 17 au niveau du tuyau fixe 11 au-delà des deux brides.

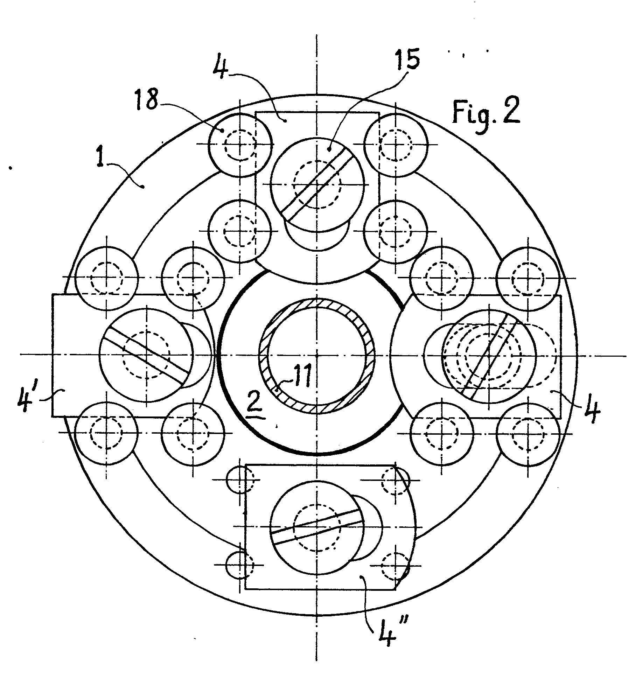

Comme on le voit mieux des figures 2 et 3, chaque clame 4 est entourée de quatre butées 18 amovibles, qui interdisent toute rotation de la clame en n'admettant que son déplacement radial. Les butées 18 sont montées sur la bride 11 à l'aide de rondelles 19 et d'un autre circlips 21. Les butées ont une tête qui surplombe la surface de la clame et fait que celle-ci reste toujours en contact avec la couronne extérieure de la bride 1.

Le fonctionnement de ce raccord est le suivant : Le tuyau 11 avec sa bride 2 est solidaire d'une installation donnée et non représentée. Il s'agit donc de rapprocher la bride 1 de la bride 2, de les aligner et solidariser. La bride 1 porte un joint d'étanchéité 3, qui s'écrase lors du serrage.

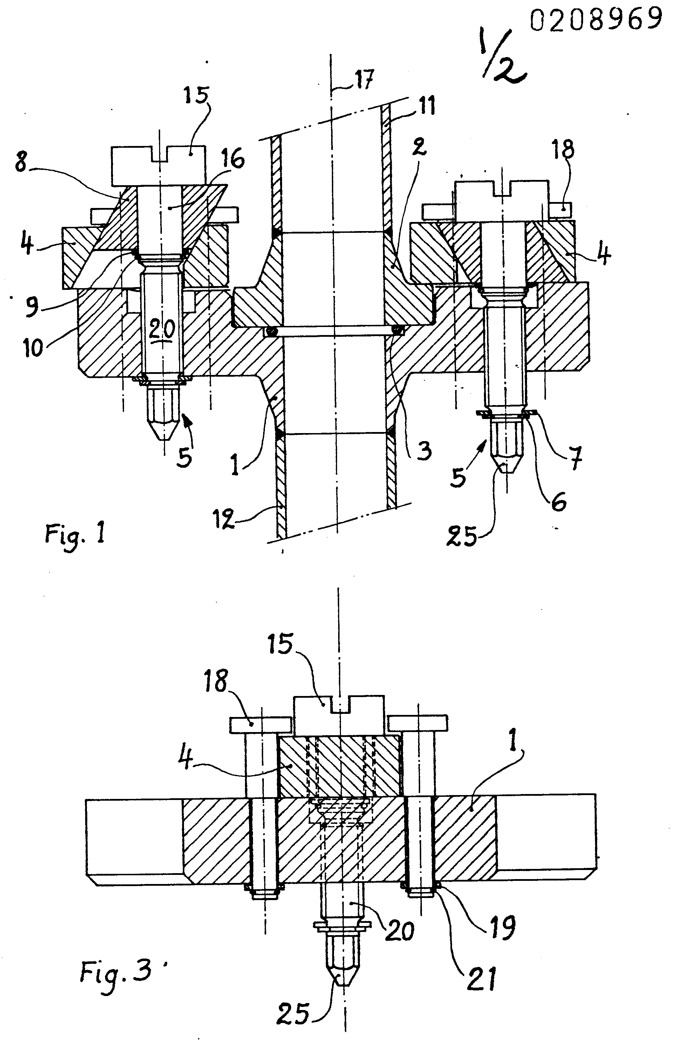

Avant le rapprochement des deux brides, les vis sont mises dans la position représentée sur la partie gauche de la figure 1. Grâce à l'axe oblique du trou dans la clame 4 et du noyau 8, les clames sont dans leurs positions éloignées de l'axe 17 admettant le rapprochement de la bride 1 vers la bride 2. Dès que les deux brides sont en contact mutuel, on engage une clé sur l'extrémité hexagonale 25 de la vis et on fait tourner la vis dans un tel sens que la tête 15 de la vis s'approche de la bride 1 en entraînant avec elle le noyau 8, qui déplace la clame vers la bride 2 jusqu'à ce qu'elle s'engage derrière cette bride (voir la partie droite de la fig. 1).

De préférence, le filetage de la vis a un pas à gauche, ce qui fait que la rotation de la vis en sens horaire (vu du côté de l'extrémité 5 de cette vis) conduit à l'engagement de la clame, alors qu'en sens anti-horaire elle conduit au découplage. En fin de course de la vis, sa tête 15 se pose sur la clame 4 elle-même et exerce ainsi la force de couplage recherchée sur la bride 2 derrière laquelle la clame s'est engagée. Le serrage de chacune des vis est fait avec un couple de serrage calculé auparavant selon les besoins pour assurer un écrasement correct du joint d'étanchéité 3.

Pour effectuer la déconnexion du raccord, on engage la même clé (non représentée) sur le bout hexagonal 25 de la vis et l'on tourne dans le sens de rotation anti-horaire. La tête 15 de la vis cesse donc de pousser sur la surface supérieure de la clame 4 et du noyau 8, et débloque dans un premier temps l'effort d'écrasement du joint 3. En continuant de faire tourner la vis, la rondelle 9 située sous le noyau 8 entraîne celui-ci axialement et le noyau, lui, fait coulisser la clame vers l'extérieur. En fin de course, définie par la butée de la rondelle 7 contre la bride 1, la bride 2 est libérée.

En cas de grippage de l'une des vis du raccord, cas qui se présente notamment après un traitement thermique ou d'irradiation du raccord, on enlève les butées 18 associées en enlevant les circlips 21 et on peut ainsi faire tourner par un outil approprié la clame 4, dont la vis est grippée.

En fig. 2, on voit deux clames 4 en position de verrouillage, une clame 4' en position d'ouverture et la quatrième clame 4" en position transversale à la suite d'un grippage de la vis correspondante, les quatre butées ayant été enlevées préalablement.

On voit donc qu'en opération normale, les positions des clames sont définies de façon univoque par la position télémanipulable de la vis correspondante. Les clames ne peuvent donc pas gêner par une position aléatoire l'approchement à une bride fixe. En cas de grippage, on arrive à découpler le raccord sans découpage de la vis, ce qui facilite notablement la réparation ultérieure de la partie mobile du raccord en atelier.

REVENDICATIONS

1. Raccord télémanipulable entre une bride fixe d'un tuyau et une bride mobile d'un autre tuyau, comportant plusieurs clames qui sont montées sur une couronne extérieure de la bride mobile et s'engagent sur une face arrière de la bride fixe, c a r a c t é r i s é  en ce que chaque clame (4) est montée sur ladite couronne de la bride mobile (1) à l'aide d'une vis télémanipulable (5 ), qui traverse la clame par un trou oblique, l'axe de chaque vis étant parallèle à l'axe (17) du tuyau, et la projection de l'axe du trou dans le plan des brides (1, 2) coincidant avec un rayon passant par l'axe du tuyau (17) et l'axe de la  vis  associée, que la vis (5 ) porte, en appui contre sa tête et libre en rotation, un noyau (8) d'une forme complémentaire audit trou, et que les clames (4) sont bloquées en rotation sur ladite couronne par des butées (18) amovibles.

2. Raccord selon la revendication 1, caractérisé en ce que les trous dans les clames (4) et les noyaux (8) ont une section oblongue et arrondie.

3. Raccord selon la revendication 1, caractérisé en ce que les trous dans les clames et les noyaux (8) ont une section rectangulaire.

4. Raccord selon l'une des revendications précédentes, caractérisé en ce que chaque noyau (8) est enfilé sur sa vis (5 ) de façon imperdable grâce à un circlips (6) logé dans une rainure circonférentielle de la vis.

5. Raccord selon l'une des revendications précédentes, caractérisé en ce que les butées (18) comportent des têtes qui assurent un guidage  des clames (4) perpendiculairement au plan des brides (1, 2).

0208969

1/2

Fig. 1

Fig. 3

0208969

Fig. 2

**Office européen
des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|-----------|--------------------------------------------------------------------------------|-------------------------|--------------------------------------|
| A | CH-A- 250 720 (GESELLSCHAFT DER LUDW. VON ROLL'SCHEN EISENWERKE AG) <br> * Page 1, lignes 49-60; figures * | 1 | F 16 L 23/02 |
| A | FR-A- 848 738 (GEWERKSCHAFT REUSS) <br> * Figure 1 * | 1 | |
| A | FR-A-1 297 826 (ROBERT) <br> * Figures * | 1 | |

DOMAINES TECHNIQUES RECHERCHES (Int. Cl.4)

F 16 L
E 21 B

Le présent rapport de recherche a été établi pour toutes les revendications

| Lieu de la recherche <br> LA HAYE | Date d'achèvement de la recherche <br> 23-10-1986 | Examinateur <br> HUBEAU M.G. |
|-----------------------------------|---------------------------------------------------|------------------------------|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82